Europäisches Patentamt

European Patent Office

Office européen des brevets

(19)

(11) Veröffentlichungsnummer: **0 294 331 B1**

(12) **EUROPÄISCHE PATENTSCHRIFT**

(45) Veröffentlichungstag der Patentschrift:
04.12.91 Patentblatt 91/49

(21) Anmeldenummer: 88810339.7

(22) Anmeldetag: 25.05.88

(51) Int. Cl.⁵: **C09C 1/20, C08K 3/24**

(54) Orthorhombische grünstichige Bleichromatpigmente.

(30) Priorität: 04.06.87 CH 2115/87

(43) Veröffentlichungstag der Anmeldung:
07.12.88 Patentblatt 88/49

(45) Bekanntmachung des Hinweises auf die
Patenterteilung:
04.12.91 Patentblatt 91/49

(84) Benannte Vertragsstaaten:
BE CH DE ES FR GB IT LI NL

(56) Entgegenhaltungen:
EP-A- 0 169 810
US-A- 3 923 538
US-A- 4 046 588

(73) Patentinhaber: CIBA-GEIGY AG
Klybeckstrasse 141
CH-4002 Basel (CH)

(72) Erfinder: Erkens, Leonardus Johannes
Hubertus , Dr.
d'Artagnanlaan 24
NL-6213 CK Maastricht (NL)
Erfinder: Geurts, Herman Joseph Johannes
Maria
Alexandereik 9
NL-6465 AX Kerkrade (NL)
Erfinder: Vandevenne, Jean Louis Ghislain
Marie
Spurkerweg 61
B-3740 Bilzen (BE)
Erfinder: Algra, Gerben Pieter, Dr.
Dianahof 50
NL-6215 RB Maastricht (NL)

## Beschreibung

Die Erfindung betrifft orthorhombische grünstichige Bleichromatpigmente enthaltend Bleichromat und Bleisulfat im Gewichtsverhältnis 91 : 9 bis 100 : 0, welche sich in der Applikation durch eine sehr hohe Farbstärke auszeichnen.

Bleichromatpigmente werden seit vielen Jahren insbesondere zum Färben von plastischen Materialien und Anstrichstoffen verwendet.

Im Gegensatz zu den monoklinen Bleichromatpigmenten, die eine stabile Kristallstruktur besitzen, sind die orthorhombischen Bleichromatpigmente weniger stabil. Die orthorhombische Kristallform kann durch die Bildung von Mischphasenkristallen mit Bleisulfat stabilisiert werden, wobei der Stabilisierungseffekt mit steigendem Gehalt an Bleisulfat zunimmt (vgl. Farbe und Lack, 72, Nr. 10, 1966, S. 966).

Bei der Herstellung orthorhombischer Bleichromatpigmente mit geringem Bleisulfatgehalt hat man als weitere Stabilisierungsmöglichkeit versucht, bestimmte Verfahrensbedingungen einzuhalten (vgl. Kittel, "Pigmente", (1960), S. 279, Zeilen 33 bis 40). Gemäss diesem Dokument [Seite 278 (Zeilen 1-8)] können verhältnismässig beständige orthorhombische Bleisulfochromate mit bis zu 90% Bleichromat erzeugt werden, wenn man in neutraler Lösung arbeitet, die Konzentration nicht über 1 : 10 steigert, Zimmertemperaturen einhält und destilliertes Wasser verwendet.

In der veröffentlichten US Patentanmeldung B 324879 werden auch orthorhombische grünstichige Bleichromatpigmente enthaltend 40 bis 85 Gew.% $PbCrO_4$ und 60 bis 15 Gew.% $PbSO_4$ beschrieben, wobei zur Förderung der Bildung der orthorhombischen Kristallstruktur bei der Synthese kleine Mengen Eisessig, Aluminium- und Pyrophosphationen mitverwendet werden (vgl. Spalte 2, Zeilen 39-43).

Auch die EP-Patentanmeldung Nr. 0169810 beschreibt orthorhombische Bleichromatpigmente. Sie enthalten Bleichromat und Bleisulfat im Gewichtsverhältnis 60 : 40 bis 100 : 0 und weisen eine Farbstärke von 0,067 bis 0,103 bei Standardfarbtiefe 1 : 25 gemäss DIN 53235 und einen Opazitätsfaktor Yschwarz/Yweiss von 0,78 bis 0,87 auf. Diese Pigmente werden durch Vermischung einer wässrigen Lösung enthaltend Bleiionen und einer wässrigen Lösung enthaltend Chromationen und erforderlichenfalls Sulfationen unter hoher Turbulenz erhalten, wobei gemäss der in diesem Dokument gegebenen Lehre zur Stabilisierung der Kristallform bei der Herstellung sowohl Zink- als auch Aluminiumsalze mitverwendet werden müssen.

Es wurde nun gefunden, dass sehr stabile orthorhombische Bleichromatpigmente oder Bleisulfochromatpigmente enthaltend einen kleinen Bleisulfatanteil erhalten werden können, wenn bei ihrer Herstellung nur Aluminiumsalze zur Stabilisierung der Kristallstruktur verwendet werden. Sie zeichnen sich zudem durch eine ausserordentlich hohe Farbstärke in der Applikation aus.

Gegenstand der vorliegenden Erfindung sind demnach orthorhombische grünstichige Bleichromatpigmente enthaltend Bleichromat und Bleisulfat im Gewichtsverhältnis 91 : 9 bis 100 : 0, welche durch eine Farbstärke von 0,066 bis 0,053 bei Standardfarbtiefe 1/25 gemäss DIN 53235 charakterisiert und durch Vermischung einer wässrigen Lösung eines Bleisalzes mit einer wässrigen Lösung eines Chromates und erforderlichenfalls eines Sulfates unter hoher Turbulenz in Gegenwart eines Aluminiumsalzes und in Abwesenheit von Zinksalzen erhältlich sind.

Bevorzugt sind orthorhombische Bleichromatpigmente, worin das Gew.-Verhältnis Bleichromat zu Bleisulfat 94 : 6 bis 98 : 2 beträgt.

Als wässrige Bleisalzlösung verwendet man beispielsweise eine Bleiacetat-, insbesondere Bleinitratlösung, als wässrige Chromatlösung beispielsweise eine Natrium- oder Kaliumchromat- oder insbesondere eine Natriumbichromatlösung und als wässrige Sulfatlösung beispielsweise eine Natrium-, Kalium- oder Ammoniumsulfatlösung. Die Konzentrationen der Bleisalzlösung und der Chromat- bzw. Chromat-/Sulfatlösungen können über einem beträchtlichen Bereich variieren. Im allgemeinen betragen die Konzentrationen etwa 0,3 bis 1,2 Mol Bleiionen pro Liter, und 0,5 bis 6 Mol Chromationen pro Liter. Geringere Konzentrationen können wirtschaftlich unvorteilhaft sein, während es bei höheren Konzentrationen im allgemeinen schwierig wird, gleichmässige Ausfällungen zu erhalten.

Als Aluminiumsalze können beispielsweise Aluminiumsulfat, -nitrat, -acetat oder -chlorid sowie Aluminate, wie Natrium-, Kalium- und Ammoniumaluminat, oder Gemische davon verwendet werden. Bevorzugt aber ist Natriumaluminat.

Es ist grundsätzlich möglich, das Aluminiumsalz beispielsweise als separate wässrige Lösung einzusetzen oder aber als wässrige Lösung mit der wässrigen Bleisalzlösung oder mit der wässrigen Chromat- oder erforderlichenfalls Chromat-Sulfat-Lösung zu vermischen und dann beide Lösungen (Bleisalzlösung und Chromat- bzw. Chromat-Sulfatlösung) anmeldungsgemäss zu vereinigen. Bevorzugt aber ist das Aluminiumsalz in der Chromatlösung oder erforderlichenfalls in der Chromat-Sulfat-Lösung vorhanden. Eine weitere Möglichkeit besteht darin, dass sowohl die Blei- als auch die Chromatlösung oder gegebenenfalls die Chromat-Sulfatlösung Aluminiumionen enthalten.

2

Die Menge des Aluminiumsalzes kann beliebig variieren. Zweckmässig werden geringe Mengen Aluminiumsalz, beispielsweise von einem Zehntel bis zu einem Fünfzigstel der erfindungsgemäss in Frage kommenden stöchiometrischen Bleisalz-Menge verwendet.

Die hohe Turbulenz kann auf verschiedene Art erreicht werden, beispielsweise durch hohe Strömungsgeschwindigkeit oder intensives mechanisches Rühren.

Hohe Strömungsgeschwindigkeit kann z.B. durch kontinuierliche Vereinigung der zu vermischenden Lösungen in einer Mischdüse erreicht werden.

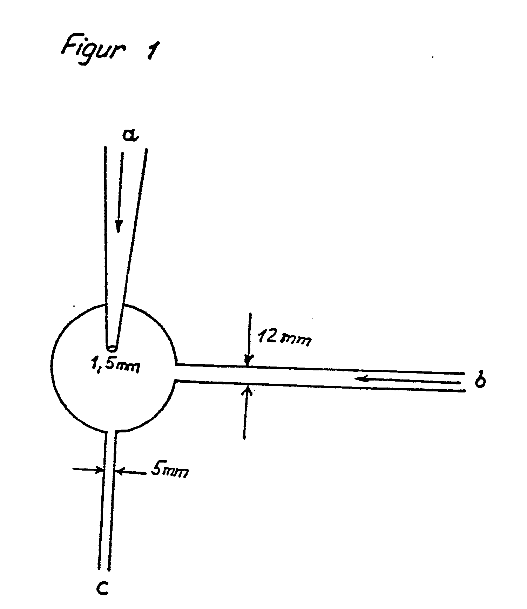

Darunter ist eine Vorrichtung zu verstehen, bei welcher die zu vermischenden Lösungen auf verhältnismässig kleinem Raum miteinander vereinigt werden, wobei mindestens eine Lösung, vorzugsweise unter erhöhtem Druck, durch eine Düse zugeführt wird. Die Mischdüse kann beispielsweise nach dem Prinzip der Wasserstrahlpumpe konstruiert sein, wobei die Zuführung der einen Flüssigkeit in der Mischdüse der Wasserzufuhr in der Wasserstrahlpumpe (Eingang a) gemäss Fig. 1 und die Zufuhr der anderen Flüssigkeit in der Mischdüse der Verbindung zu dem zu evakuierenden Gefäss in der Wasserstrahlpumpe (Eingang b) gemäss Fig. 1 entspricht und gegebenenfalls auch diese letztere Flüssigkeitszufuhr unter erhöhtem Druck erfolgt.

Zur Durchführung der Fällung in der Mischdüse wird zweckmässig die wässrige Lösung enthaltend das Chromat und erforderlichenfalls das Sulfat bei einer Strömungsgeschwindigkeit von mindestens 4,9 m/sec mit der wässrigen Lösung des Bleisalzes bei einer Strömungsgeschwindigkeit von mindestens 0,08 m/sec kontinuierlich, vorzugsweise bei Zimmertemperatur, vereinigt. Die Fällung wird vorzugsweise bei Raumtemperatur und einem pH von 2-5, zweckmässig in Gegenwart eines Ueberschusses an Bleiionen von 0,003-0,012 Mol pro Liter über die stöchiometrische Menge, durchgeführt. Das Produkt verlässt die Mischdüse durch den Ausgang c) gemäss Fig. 1.

Geeignet für intensives mechanisches Rühren sind beispielsweise im Handel erhältliche Hochleistungsrührer, wie z.B. der Ultra-Turrax der Fa. Janke und Kunkel KG, Staufen, BRD, der Ystral der Fa. Ystral GmbH, Ballrechten-Dottingen, BRD, der Polytron der Fa. Kinematica, Kriens-Luzern, CH, der Silverson-Rührer der Silverson Mach Ltd., Chesham/UK oder der Chemcol-Mischer der Chemiecolor AG, Kilchberg-Zürich, CH. Andere Typen von Hochleistungsrührern, die ebenfalls eingesetzt werden können, sind unter anderem der Pendraulik der Pendraulik Maschinen und Apparate GmbH, Bad Münder am Deister, BRD und Durchstrommischer, wie z.B. jene der Firma Gronfa Process Technik BV/Rozendaal, NL.

Dabei ist es wichtig, dass die Zugabe der Lösungen, einerseits des Bleisalzes und andererseits des Chromates und erforderlichenfalls des Sulfates, in der unmittelbaren Nähe des Schaftes beim Rotor des Hochleistungsrührers erfolgt. Die Vermischung der beiden Hauptkomponenten in der turbulenten Zone kann sowohl kontinuierlich durch gleichzeitige Zuführung als auch diskontinuierlich durch Vorlage der einen und Zu dosierung der zweiten Komponente geschehen. Im ersten Fall werden zweckmässig einerseits die Chromatlösung oder die Chromat-Sulfatlösung und andererseits die Bleisalzlösung durch zwei separate Leitungen in die unmittelbare Nähe des Schaftes beim Rotor geführt. Im zweiten Fall wird beispielsweise die Bleisalzlösung vorgelegt, und die Chromatlösung oder die ChromatSulfatlösung wird durch ein Rohr in unmittelbarer Nähe des Schaftes beim Rotor des Hochleistungsrührers zugegeben. Es soll dafür gesorgt werden, dass nach beendter Fällung ein Ueberschuss an Bleiionen von 0,003-0,012 Mol/Liter über die stöchiometrische Menge vorhanden ist.

Erfindungsgemäss bevorzugt sind Hochleistungsrührer.

Bei den für die Umsetzung/Ausfällung angewandten Bedingungen ist eine beträchtliche Variantenbreite möglich. Im allgemeinen wird die Umsetzung so durchgeführt, dass man die verschiedenen wässrigen Lösungen bei Temperaturen von 0 bis 80°C, bevorzugt von 15 bis 80°C, vermischt, wobei der End-pH Wert nach der Umsetzung vorzugsweise im sauren Bereich, vorzugsweise zwischen 1,5 und 5, liegt. Die Gesamtzeit für die Reaktion kann je nach Ansatzgrösse auch variieren, beträgt aber im allgemeinen bis zu 3 Stunden.

Die ausgefällten orthorhombischen Bleichromatpigmente zeichnen sich durch eine feine Teilchengrösse aus.

Zur besseren Ausbildung der Kristalle erweist sich ein Altern, beispielsweise durch Stehenlassen bei Raumtemperatur oder durch Erwärmen, beispielsweise bis auf 35°C, als vorteilhaft.

Zur Verbesserung der Pigmenteigenschaften, wie beispielsweise der Stabilität gegen Wärme, Licht und chemische Angriffe, ist es vorteilhaft, die Pigmentteilchen während der Fällung oder durch eine Nachbehandlung nach bekannten, beispielsweise in den US-PS 3,370,971, 3,639,133 und 4,046,588 beschriebenen Verfahren, mit einer Schutzhülle zu überziehen. Zu diesem Zweck werden auf dem Pigment anorganische Verbindungen, beispielsweise Aluminium-, Titan-, Antimon-, Cerium- oder Siliziumverbindungen oder Gemische davon, ausgefällt.

Die Menge des Umhüllungsmittels beträgt zweckmässig 2-40, vorzugsweise 2-20 und insbesondere 3-10%, bezogen auf das Gesamtgewicht des Pigmentes.

Die erhaltenen orthorhombischen Bleichromatpigmente können zusätzlich mit texturverbessernden Mitteln behandelt werden, beispielsweise mit langkettigen aliphatischen Alkoholen, Estern, Säuren oder deren Salzen, Aminen, Amiden, Wachsen oder harzartigen Substanzen, wie Abietinsäure, deren Hydrierungsprodukten, Estern oder Salzen, ferner mit nichtionogenen, anionischen oder kationischen oberflächenaktiven organischen Mitteln.

Die Aufarbeitung der erfindungsgemässen Bleichromatpigmente erfolgt auf übliche Art, beispielsweise durch Abfiltrieren, Auswaschen des Filterkuchens mit Wasser zur Entfernung löslicher Salze, Trocknen und Pulverisieren.

Die erfindungsgemässen Bleichromatpigmente zeichnen sich durch eine sehr hohe Farbstärke aus.

Die Farbstärke wird durch dasjenige Verhältnis eines in einem Lack applizierten Buntpigments zu Weisspigment ($TiO_2$) ausgedrückt, welches zur Standardfarbtiefe 1/25 gemäss DIN 53235 führt. Dieses Verhältnis gibt also diejenige Menge Buntpigment an, welche in Abmischung mit einer gegebenen Menge Weisspigment die Herstellung einer Lackausfärbung bei Standardfarbtiefe 1/25 erlaubt.

Die erfindungsgemässen orthorhombischen Bleichromatpigmente besitzen ferner in der Applikation bei hoher Farbstärke eine gute Lichtbeständigkeit sowie eine hohe Sättigung. Zudem zeichnen sie sich trotz ihrer hohen Farbstärke durch gutes Fliessverhalten der daraus hergestellten Druckfarben und Lacken aus.

Der Bleichromatgehalt wird nach Aufschliessen des Pigments gemäss der in "Volumetric Analysis, Volume III, Titration Methods" von I.M. Kolthoff, R. Belcher, V.A. Stenger und G. Matsuyama (Interscience Publishers; New York, 1975) beschriebenen Methode bestimmt.

Der Bleisulfatgehalt wird nach Aufschliessen des Pigments gemäss der in "Vogel's Textbook of Quantitative Inorganic Analysis", vierte Edition, von. J. Basset, R.C. Denney, G.H. Jeffery und J.Mendham (Longman; New York, 1978) beschriebenen Methode bestimmt.

Die erfindungsgemässen Bleichromatpigmente können einzeln oder in Mischungen untereinander oder mit anderen Pigmenten, z.B. Phthalocyaninblau, Molybdatorange oder Berlinerblau zum Pigmentieren von hochmolekularem organischem Material verwendet werden, z.B. von Celluloseäthern und -estern, Acetylcellulose, Nitrocellulose, natürlichen Harzen oder Kunstharzen, wie Polymerisations- oder Kondensationsharze, z.B. Aminoplaste, insbesondere Harnstoff- und Melamin-Formaldehydharze, Phenoplaste, Alkydharze, Polyolefine, wie Polyäthylen oder Polypropylen, ferner Polystyrol, Polyvinylchlorid, Polyacrylnitril, Polyacryl- und Polymethacrylsäureester, Polycarbonate, Gummi, Casein, Silikon und Silikonharze.

Die erwähnten hochmolekularen Verbindungen können sowohl als plastische Massen, Schmelzen oder in Form von Spinnlösungen, Lacken oder insbesondere Druckfarben vorliegen. Je nach Verwendungszweck erweist es sich als vorteilhaft, die neuen Pigmente als Toner oder in Form von Präparaten zu verwenden. Liegen Präparate vor, so kann die Pigmentkonzentration beispielsweise bis zu 70 Gew.% betragen. Bezogen auf das zu pigmentierende hochmolekulare organische Material kann man die erfindungsgemässen Bleichromatpigmente beispielsweise in einer Menge von 0,1 bis 30 Gew.% einsetzen.

In den nachfolgenden Beispielen und in der Beschreibung bedeuten Teile, sofern nichts anderes angegeben, Gew.-Teile und die Prozente Gewichtsprozente.

## Beispiel 1

In einem 25 l-Reaktionsgefäss mit Hochleistungsrührer (Durchmesser des Rotors 4,0 cm, Umfangsgeschwindigkeit des Rotors 17 m/sec.) legt man 12,5 Liter einer wässrigen Lösung enthaltend 503,5 g Bleinitrat und 495 ml einer 10%-igen Natriumhyroxidlösung vor. Bei Raumtemperatur gibt man innerhalb von 5 Minuten in unmittelbarer Nähe des Schaftes beim Rotor des Hochleistungsrührers durch zwei Glasrohre gleichzeitig 750 ml einer wässrigen Lösung enthaltend 190,8 g $Na_2Cr_2O_7 \cdot 2 H_2O$ und 10,3 g Natriumsulfat und 750 ml einer wässrigen Lösung von 6,34 g Natriumaluminat ($NaAlO_2 \cdot H_2O$) zu. Nach der Fällung liegt der Ueberschuss an Blei 0,003 Mol $Pb^{2+}$/l über der stöchiometrischen Menge. Danach wird eine Lösung von 47,6 g Titanoxychlorid in 120 ml Wasser zugegeben. Der pH-Wert der erhaltenen Reaktionsmischung wird durch Zugabe von etwa 70 g wasserfreiem Natriumcarbonat in 500 ml Wasser auf 6,0 eingestellt. Zur Reifung der Kristalle lässt man den Niederschlag während 18 Stunden absetzen. Anschliessend wird die Suspension während einer Stunde gerührt. Zur Umhüllung der Pigmentteilchen wird dann eine Lösung von 18,8 g Aluminiumsulfat · 18 $H_2O$ in 400 ml Wasser und danach eine Lösung von 7,6 g einer 75%-igen $H_3PO_4$-Lösung in 400 ml Wasser zugegeben. Der End-pH-Wert wird durch Zugabe von etwa 90 g wasserfreiem Natriumcarbonat in 500 ml Wasser auf 8,0 eingestellt. Der erhaltene Niederschlag wird abfiltriert, zur Entfernung löslicher Salze mit Wasser gewaschen und bei einer Temperatur von 90°C getrocknet.

Zusammensetzung des erhaltenen Chromatsulfatpigmentes (Mischkristalles): 93% $PbCrO_4$ und 7% $PbSO_4$. Anteil der Umhüllung am Gesamtgewicht des Pigmentes: 4%. Die Farbstärke (bei 1/25 Standardfarbtiefe) beträgt 0,066.

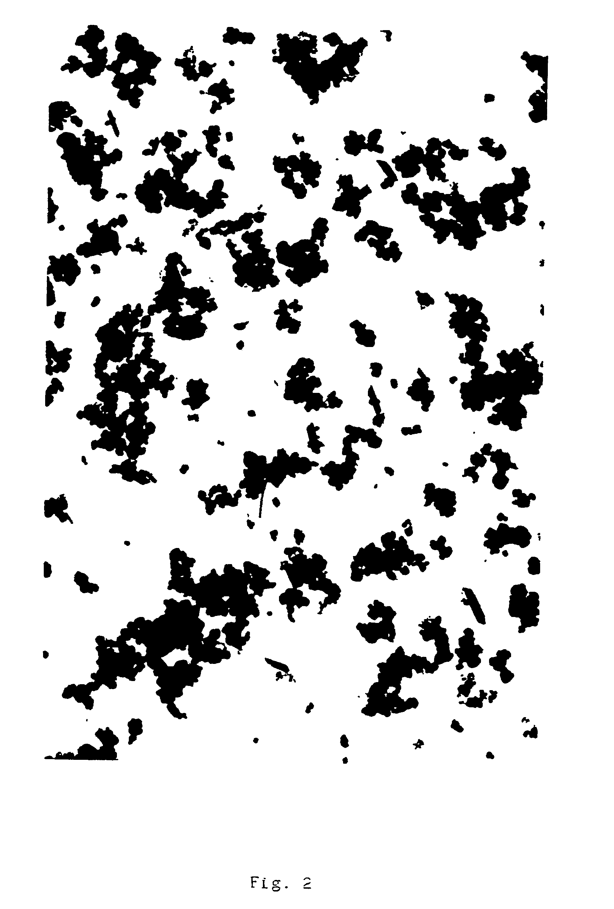

Figur 2 zeigt eine Aufnahme dieser Mischkristalle im Elektronenmikroskop bei 20'000-facher Vergrösserung der während einiger Sekunden in einem 50%-igen Aethylalkohol-Wasser-Gemisch mit Ultraschall dispergierten Pigmentteilchen.

Der Bleichromatgehalt wird nach folgender Arbeitsweise bestimmt :

0,250 g erfindungsgemässes Bleichromat werden in einen 300 ml Erlenmeyer-Kolben mit geschliffenem Stöpsel gegeben. Dann werden 10 ml 4N-Natronlauge zugegeben, und das Gemisch wird erhitzt, bis das Bleichromat völlig gelöst ist. Das Gemisch wird mit 40 ml destilliertem Wasser verdünnt und auf Zimmertemperature gekühlt. Darauf werden 0,5 g Natriumcarbonat (wasserfrei), 4,0 g Kaliumiodid und 30 ml Salzsäure 4N zugegeben. Der Erlenmeyer-Kolben wird sofort mit dem Stöpsel verschlossen und erforderlichenfalls gekühlt.

Das Gemisch wird dann während zwei Stunden im Dunkeln gelassen und ab und zu geschwenkt. Darauf werden 80 ml destilliertes Wasser und 0,5 g Natriumcarbonat (wasserfrei) zugegeben. Das Gemisch wird mit Natriumthiosulfat nach an und für sich bekannten Verfahren titriert. In der Nähe des Titrationsendpunktes wird zusätzlich Stärkemehl zugegeben.

Der Bleisulfatgehalt wird nach folgender Arbeitsweise bestimmt :

0,5 bis 1,0 g erfindungsgemässes Bleichromat werden sehr genau abgewogen und zusammen mit 6,0 g Soda in einem 150 ml Becherglas gemischt, worauf 50 ml heisses Wasser zugegeben werden. Das Gemisch wird gekocht, bis das Pigment völlig gelöst ist. Darauf werden zusäzlich 50 ml Wasser zugegeben, und das Becherglas wird während einer halben Stunde auf ein Wasserbad (90-95°C) gestellt. Das Gemisch wird filtriert, und der Rückstand wird mit einer 1%-igen Sodalösung gewaschen. Das Filtrat wird in ein 600 ml Becherglas gegossen und bis zum Farbumschlag mit Salzsäure vorsichtig neutralisiert, worauf zusätzlich 10 ml Salzsäure zugegeben werden. Danach werden 10 ml Wasserstoffperoxyd (3%ig) zugegeben, und das Gemisch wird während 10 Minuten gekocht, bis das sechswertige Chrom im Chromat zum dreiwertigen Chrom reduziert ist. Dann werden 50 ml Eisessig zugegeben, und das Gemisch wird mit Wasser auf etwa 400 ml verdünnt. Die Lösung wird auf 100°C erwärmt, worauf schnell 50 ml einer kochenden Bariumchloridlösung (0,1 N) zugegeben werden. Das Gemisch wird auf überschüssiges Barium nach an und für sich bekannten Verfahren analysiert und während zwei Stunden auf dem Wasserbad erhitzt.

Der Bariumsulfat-Niederschlag wird filtriert (Filter MN 640 d), mit HCl (1 : 99) und anschliessend mit heissem Wasser chloridfrei gewaschen. Der Niederschlag wird bei 105-110°C getrocknet, bei 800°C eingeäschert und bis zur Gewichtskonstanz geglüht.

Der Bleichromat- und Bleisulfat-Gehalt wird auch in allen nachfolgenden Beispielen nach diesen Methoden bestimmt.

## Beispiel 2

Stellt man ein nach dem in Beispiel 1 beschriebenen Verfahren erhaltenes Pigment im Verhältnis $PbCrO_4/PbSO_4$ von 98,2% zu 1,8% durch Verwendung entsprechender Blei-, Chromat- und Sulfatmengen her, so weist das erhaltene Bleichromatsulfatpigment (Mischkristall) eine Farbstärke von 0,062 bei Standardfarbtiefe 1/25 auf.

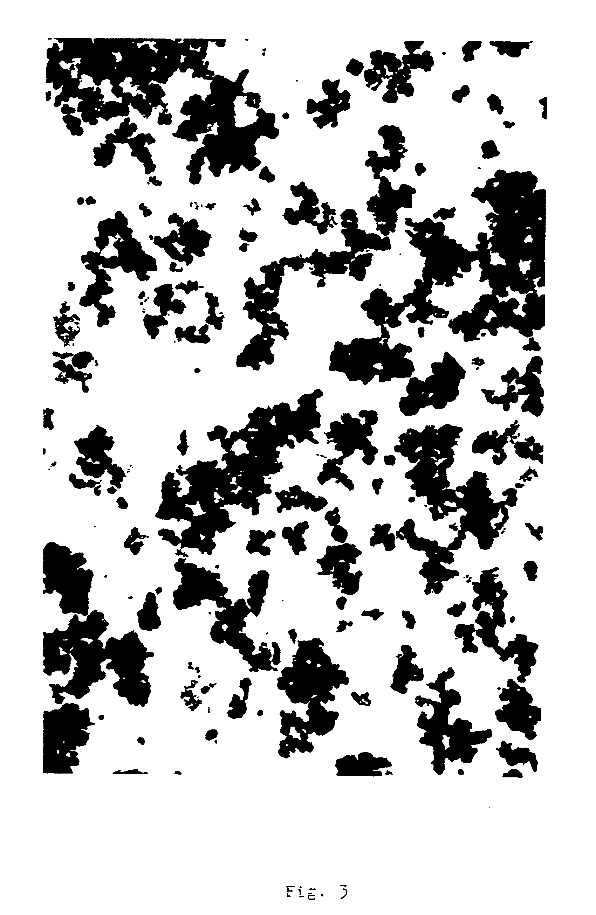

Figur 3 zeigt eine Aufnahme dieser Mischkristalle im Elektronenmikroskop bei 20'000-facher Vergrösserung der während einiger Sekunden in einem 50%-igen Aethylalkohol-Wasser-Gemisch mit Ultraschall dispergierten Pigmentteilchen.

## Beispiel 3 :

Stellt man ein nach dem in Beispiel 1 beschriebenen Verfahren erhaltenes Pigment im Verhältnis $PbCrO_4/PbSO_4$ von 99,3% zu 0,7% durch Verwendung entsprechender Blei-, Chromat- und sulfatmengen her, so weist das erhaltene Bleichromatsulfatpigment (Mischkristall) eine Farbstärke von 0,055 bei Standardfarbtiefe 1/25 auf.

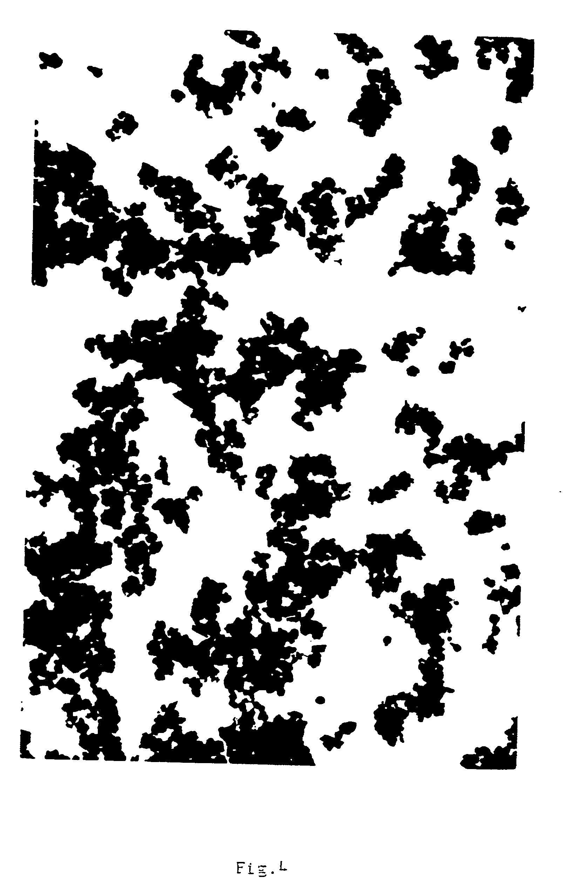

Figure 4 zeigt eine Aufnahme dieser Mischkristalle im Elektronenmikroskop bei 20'000-facher Vergrösserung der während einiger Sekunden in einem 50%igen Aethylalkohol-Wasser-Gemisch mit Ultraschall dispergierten Pigmentteilchen.

## Beispiel 4 (Aluminiumsalz in der Chromat-Sulfatlösung) :

In einem 25 l-Reaktionsgefäss mit Hochleistungsrührer (Durchmesser des Rotors 4,0 cm, Umfangsgeschwindigkeit des Rotors 17 m.sec.) legt man 12,5 Liter einer wässrigen Lösung enthaltend 503,5 g Bleinitrat und 495 ml einer 10%-igen Natriumhydroxidlösung vor. Bei Raumtemperatur gibt man innerhalb von 5 Minuten in unmittelbarer Nähe des Schaftes beim Rotor des Hochleistungsrührers durch ein Glasrohr 750 ml einer wässrigen Lösung enthaltend 190,8 g $Na_2Cr_2O_7 \cdot 2H_2O$, 10,3 g Natriumsulfat und 29,2 g Aluminiumnitrat $Al(NO_3)_3$

· 9H$_2$O zu. Nach der Fällung liegt der Ueberschuss an Blei 0,003 Mol Pb$^{2+}$/l über der stöchiometrischen Menge. Danach wird eine Lösung von 47,6 g Titanoxychlorid in 120 ml Wasser zugegeben. Der pH-Wert der erhaltenen Reaktionsmischung wird durch Zugabe von etwa 70 g wasserfreiem Natriumcarbonat in 500 ml Wasser auf 6,0 eingestellt. Zur Reifung der Kristalle lässt man den Niederschlag während 18 Stunden absetzen. Anschliessend wird die Suspension während einer Stunde gerührt.

Zur Umhüllung der Pigmentteilchen wird dann eine Lösung von 18,8 g Aluminiumsulfat · 18H$_2$O in 400 ml Wasser und danach eine Lösung von 7,6 g einer 75%-igen H$_3$PO$_4$-Lösung in 400 ml Wasser und danach eine Lösung von 18,8 g Aluminiumsulfat · 18H$_2$O in 400 ml Wasser zugegeben. Der End-pH-Wert wird durch Zugabe von etwa 90 g wasserfreiem Natriumcarbonat in 500 ml Wasser auf 8,0 eingestellt. Der erhaltene Niederschlag wird abfiltriert, zur Entfernung löslicher Salze mit Wasser gewaschen und bei einer Temperatur von 90°C getrocknet.

Zusammensetzung des erhaltenen Chromatsulfatpigmentes (Mischkristalles) :
93% PbCrO$_4$ und 7% PbSO$_4$. Anteil der Umhüllung am Gesamtgewicht des Pigmentes : 4%. Die Farbstärke (bei 1/25 Standardfarbtiefe) beträgt 0,053.

Beispiel 5 (Verwendung von Aluminiumacetat) :

In einem 25 l-Reaktionsgefäss mit Hochleistungsrührer (Durchmesser des Rotors 4,0 cm, Umfangsgeschwindigkeit des Rotors 17 m/sec.) legt man 12,5 Liter einer wässrigen Lösung enthaltend 503,5 g Bleinitrat und 495 ml einer 10%-igen Natriumhydroxyidlösung vor. Bei Raumtemperatur gibt man innerhalb von 5 Minuten in unmittelbarer Nähe des Schaftes beim Rotor des Hochleistungsrührers durch zwei Glasrohre gleichzeitig 750 ml einer wässrigen Lösung enthaltend 190,8 g Na$_2$Cr$_2$O$_7$ · 2H$_2$O und 10,3 g Natriumsulfat und 750 ml einer wässrigen Lösung von 15,9 g Aluminiumacetat Al(C$_2$H$_3$O$_2$)$_3$ zu. Nach der Fällung liegt der Ueberschuss an Blei 0,003 Mol Pb$^{2+}$/l über der stöchiometrischen Menge. Danach wird eine Lösung von 47,6 g Titanoxychlorid in 120 ml Wasser zugegeben. Der pH-Wert der erhaltenen Reaktionsmischung wird durch Zugabe von etwa 70 g wasserfreiem Natriumcarbonat in 500 ml Wasser auf 6,0 eingestellt. Zur Reifung der Kristalle lässt man den Niederschlag während 18 Stunden absetzen. Anschliessend wird die Suspension während einer Stunde gerührt. Zur Umhüllung der Pigmentteilchen wird dann eine Lösung von 18,8 g Aluminiumsulfat · 18H$_2$O in 400 ml Wasser und danach eine Lösung von 7,6 g einer 75%-igen H$_3$PO$_4$-Lösung in 400 ml Wasser zugegeben. Der End-pH-Wert wird durch Zugabe von etwa 90 g wasserfreiem Natriumcarbonat in 500 ml Wasser auf 8,0 eingestellt. Der erhaltene Niederschlag wird abfiltriert, zur Entfernung löslicher Salze mit Wasser gewaschen und bei einer Temperatur von 90°C getrocknet.

Zusammensetzung des erhaltenen Chromatsulfatpigmentes (Mischkristalles) :
93% PbCrO$_4$ und 7% PbSO$_4$. Anteil der Umhüllung am Gesamtgewicht des Pigmentes : 4%. Die Farbstürke (bei 1/25 Standardfarbtiefe) beträgt 0,060.

Beispiel 6 (Aluminiumsalz in der Bleisalzlösung) :

In einem 25 l-Reaktionsgefäss mit Hochleistungsrührer (Durchmesser des Rotors 4,0 cm, Umfangsgeschwindigkeit des Rotors 17 m/sec.) legt man 11,0 Liter einer wässrigen Lösung enthaltend 38,3 g Bleinitrat Pb(NO$_3$)$_2$ und 6,34 g Natriumaluminat (NaAlO$_2$ · H$_2$O) vor. Bei Raumtemperatur gibt man innerhalb von 5 Minuten in unmittelbarer Nähe des Schaftes beim Rotor des Hochleistungrührers durch zwei Glasrohre gleichzeitig 1500 ml einer wässrigen Lösung enthaltend 190,8 g Na$_2$Cr$_2$O$_7$ · 2H$_2$O und 10,3 g Natriumsulfat und 1500 ml einer wässrigen Lösung enthaltend 465,3 g Bleinitrat zu. Während der Fällung wird der pH durch Zugabe von etwa 495 ml einer 10%-igen Natriumhydroxidlösung zwischen 2,5 und 3,0 eingestellt. Nach der Fällung liegt der Ueberschuss an Blei 0,003 Mol Pb$^{2+}$/l über der stöchiometrischen Menge. Danach wird eine Lösung von 47,6 g Titanoxychlorid in 120 ml Wasser zugegeben. Der pH-Wert der erhaltenen Reaktionsmischung wird durch Zugabe von etwa 70 g wasserfreiem Natriumcarbonat in 500 ml Wasser auf 6,0 eingestellt. Zur Reifung der Kristalle lässt man den Niederschlag während 18 Stunden absetzen. Anschliessend wird die Suspension während einer Stunde gerührt. Zur Umhüllung der Pigmentteilchen wird dann eine Lösung von 18,8 g Aluminiumsulfat · 18H$_2$O in 400 ml Wasser und danach eine Lösung von 7,6 g einer 75%-igen H$_3$PO$_4$-Lösung in 400 ml Wasser zugegeben. Der End-pH-Wert wird durch Zugabe von etwa 90 g wasserfreiem Natriumcarbonat in 500 ml Wasser auf 8,0 eingestellt. Der erhaltene Niederschlag wird abfiltriert, zur Entfernung löslicher Salze mit Wasser gewaschen und bei einer Temperatur von 90°C getrocknet.

Zusammensetzung des erhaltenen Chromatsulfatpigmentes (Mischkristalles) :
93% PbCrO$_4$ und 7% PbSO$_4$. Anteil der Umhüllung am Gesamtgewicht des Pigmentes : 4%. Die Farbstärke (bei 1/25 Standardfarbtiefe) beträgt 0,053.

Beispiel 7 (Verwendung von einem Sechszehntel der eingesetzten Bleisalzmenge) :

Verfährt man genau wie in Beispiel 1 angegeben, erhöht aber die einzusetzende Natriumaluminatmenge auf 1/16 (9,50 g NaAlO$_2$ · H$_2$O) statt 1/24 (6,34 g) der Bleisalzmenge, sor erhält man ein Produkt der Zusammensetzung (Mischkristall) :
93% PbCrO$_4$ und 7% PbSO$_4$. Anteil der Umhüllung am Gesamtgewicht des Pigmentes : 4%. Die Farbstärke (bei 1/25 Standardfarbtiefe) beträgt 0,058.

Beispiel 8 (1/10 der Menge Aluminat) :

Verfährt man genau wie in Beispiel 1 angegeben, erhöht aber die einzusetzende Natriumaluminatmenge auf 1/10 (15,2 g NaAlO$_2$ · H$_2$O) statt 1/24 (6,34 g), so erhält man ein Produkt der Zusammensetzung (Mischkristall) :
93% PbCrO$_4$ und 7% PbSO$_4$. Anteil der Umhüllung am Gesamtgewicht des Pigmentes : 4%. Die Farbstärke (bei 1/25 Standardfarbtiefe) beträgt 0,062.

Beispiel 9 (1/32 der Menge Aluminat) :

Verfährt man genau wie in Beispiel 1 angegeben, verkleinert aber die einzusetzende Natriumaluminatmenge auf 1/32 (4,76 g NaAlO$_2$ · H$_2$O) statt 1/24 (6,34 g), so erhält man ein Produkt der Zusammensetzung (Mischkristall) :
93% PbCrO$_4$ und 7% PbSO$_4$. Anteil der Umhüllung am Gesamtgewicht des Pigmentes : 4%. Die Farbstärke (bei 1/25 Standardfarbtiefe) beträgt 0,060.

Beispiel 10 (1/50 der Menge Aluminat) :

Verfährt man genau wie in Beispiel 1 angegeben, verkleinert aber die einzusetzende Natriumaluminatmenge auf 1/50 (3,0 g NaAlO$_2$ · H$_2$O) statt 1/24 (6,34 g), so erhält man ein Produkt der Zusammensetzung (Mischkristall) :
93% PbCrO$_4$ und 7% PbSO$_4$. Anteil der Umhüllung am Gesamtgewicht des Pigmentes : 4%. Die Farbstärke (bei 1/25 Standardfarbtiefe) beträgt 0,058.

Beispiel 11 (Anwendungsbeispiel im Buchdruck) :

1,0 g des gemäss Beispiel 3 erhaltenen Bleichromatpigmentes wird mit
4,0 g Druckfirnis der Zusammensetzung :

| | |
|---|---|
| 29,4% Leinöl-Standöl | (300 Poise), |
| 67,2% Leinöl-Standöl | (20 Poise), |
| 2,1% Kobaltoctoat | (8% Co) und |
| 1,3% Bleioctoat | (25% Pb) |

auf einer Engelsmann-Anreibmaschine fein angerieben und hierauf mit Hilfe eines Klischees im Buchdruckverfahren mit 1 g/m$^2$ auf Kunstdruckpapier gedruckt. Man erhält einen starken gelben Farbton mit guter Farbstärke sowie gutem Glanz.
Das Pigment eignet sich auf für andere Druckverfahren, wie Tiefdruck, Offsetdruck, Flexodruck, und ergibt hier ebenfalls sehr gute Resultate.

Beispiel 12 (Anwendungsbeispiel in PVC) :

0,6 g des gemäss Beispiel 1 erhaltenen Pigments werden mit 76 g Polyvinylchlorid, 33 g Dioctylphthalat, 2 g Dibutylzinndilaurat und 2 g Titandioxid zusammengemischt und auf dem Walzenstuhl während 15 Minuten bei 160°C zu einer dünnen Folie verarbeitet. Die so erzeugte grünstichig gelbe Färbung ist farbstark, migrations- und lichtbeständig.

Beispiel 13 (Anwendungsbeispiel in Polystyrol) :

0,05 g des gemäss Beispiel 1 erhaltenen Pigments werden mit 100 g Polystyrol trocken gemischt. Das Gemisch wird bei Temperaturen zwischen 180 und 220°C geknetet, bis eine homogene Einfärbung entstanden ist. Man lässt die gefärbte Masse abkühlen und vermahlt sie in der Mühle zu einer Teilchengrösse von etwa 2 bis 4 mm.

Das so erhaltene Granulat wird in einer Spritzgussmaschine bei Temperaturen zwischen 220 und 300°C zu Formkörpern verarbeitet. Man erhält grünstichig gelb gefärbte Massen von guter Licht- und Temperaturbeständigkeit.

Beispiel 14 (Anwendungsbeispiel in einem Alkydmelamin-Lack) :

60 g einer 60%igen Lösung eines nicht-trocknenden Alkydharzes in Xylol (Handelsname Beckosol® 27-320 der Firma Reichold-Albert- Chemie), 36 g einer 50%igen Lösung eines Melamin-Formaldehyd-Harzes in einem Alkohol-Aromaten-Gemisch (Handelsname Super-Beckamin® 13-501 der Firma Reichold-Albert-Chemie), 2 g Xylol und 2 g Methylcellosolve werden vermischt. 100 g dieses Gemisches werden mit Hilfe eines Rührers zu einer homogenen Lacklösung verrührt. 95 g des so erhaltenen Klarlackes und 5 g des gemäss Beispiel 3 erhaltenen Pigmentes werden in einer Kugelmühle während 72 Stunden gemahlen. Der eingefärbte Lack wird dann nach üblicher Spritzmethode auf ein Blech appliziert und 30 Minuten bei 120°C eingebrannt. Man erhält eine gelbe Lackierung von guter Lichtbeständigkeit.

Herstellung der Ausfärbung zur Ermittlung der Farbstärke.

Arbeitsweise zur Herstellung des Weissverschnittlackes

Zur Ermittlung der Farbstärke wird auf die folgende Weise eine Lackausfärbung hergestellt.
Zur Einstellung der Standardfarbtiefe 1/25 gemäss DIN 53235 wird eine Menge von
x g Buntpigment bezogen auf 10,0 g Titandioxid zugegeben.

In einem 100 ml Glasbehälter mit Deckel werden hintereinander zugegeben :

70 g         Glasperlen, Ø 3 mm,
13,6 g       Dispergiermedium,
x g          Buntpigment und
10,0 g       Titandioxid (Typ RCR-2, Firma Tioxid).

Das Dispergiermedium besteht aus :

34,4%        Alkydlack (Sigmol® 820, Sojaphthalat eines Alkydharzes, 70 Gew.%, in Shellsol® H (white spirit) gelöst, Firma Necarbo),
47%          Lösungsmittel (Shellsol® H),
0,3%         Dispergierungsmittel [Borchigen® 911 (Soja Lecithin) der Firma Borchers],
0,8%         Antifellmittel (Luaktine, 10% in Shellsol® H),
1,1%         Antiflockungsmittel (1%-iges Silikonöl in Shellsol® H, Fa. Byk-Malinckrodt),
16,4%        Sikkative (Octanoatsalzgemisch, 13% Pb, 65% Co, 0,9% Ca).

Zur Dispergierung wird der Glasbehälter mit Inhalt während 10 Min. mit dem Dispergiergerät "Red Devil" geschüttelt. Anschliessend werden 35 Gew. Teile Sigmol® 820 zugegeben und erneut 10 Min. mit dem Dispergiergerät "Red Devil" dispergiert. Auf einer Anstrichkarte (Karton der Firma Leneta, USA, Form 2A und WdX) wird mit dem Filmziehgerät Bird Applikator BA-30 ein Lackfilm aufgebracht, der anschliessend während 12 Stunden an der Luft getrocknet wird (Nassfilmdicke : 80 Micron ; Trockenfilmdicke : 30 Micron). Danach werden die Farbmessungen durchgeführt.

Farbmessung

Die Farbmessungen werden an den beschriebenen Lackapplikationen durchgeführt. Zur Bestimmung der Farbstärke wird an den Lackfilmen nur über weissem Untergrund gemessen.
Ueber die Bestimmung der Farbstärke auf der Basis von DIN 53235 wurde bereits auf Seite 6, Zeilen 17 bis 22, berichtet.

Technische Daten des Messapparates

Spektrophotometer :    Zeiss RFC-3 ;
Geometrie :            d/8° ;

Messöffnung :     30 mm ;
Wellenlänge :     400-700 nm, jede 20 nm.

Eichung

Der Weisstandard wird aus BaSO$_4$ für Farbmessung (Merck) hergestellt. Zu diesem Zweck wird eine Tablette gepresst, und die gemessenen Werte werden als Absolutwerte eingegeben. Der Schwarzstandard (Zeiss) ist ein einseitig geschlossenes und mit Samt ausgekleidetes Rohr (Reflektionswert 0%).

**Patentansprüche**

**Patentansprüche für folgende Vertragsstaaten : BE, CH, DE, FR, GB, IT, LI, NL**

1 Orthorhombische grünstichige Bleichromatpigmente enthaltend Bleichromat und Bleisulfat im Gewichtsverhältnis 91 : 9 bis 100 : 0, welche durch eine Farbstärke von 0,066 bis 0,053 bei Standardfarbtiefe 1/25 gemäss DIN 53235 charakterisiert und durch Vermischung der wässrigen Lösung eines Bleisalzes mit der wässrigen Lösung eines Chromates und erforderlichenfalls eines Sulfates unter hoher Turbulenz in Gegenwart eines Aluminiumsalzes und in Abwesenheit von Zinksalzen erhältlich sind.

2. Bleichromatpigmente gemäss Anspruch 1 dadurch erhältlich, dass das Aluminiumsalz in der Chromatoder erforderlichenfalls in der Chromat-Sulfatlösung vorhanden ist.

3. Bleichromatpigmente gemäss Anspruch 1 dadurch erhältlich, dass als Aluminiumsalz ein Aluminat verwendet wird.

4. Bleichromatpigmente gemäss Anspruch 3 dadurch erhältlich, dass als Aluminat Natriumaluminat verwendet wird.

5. Bleichromatpigmente gemäss Anspruch 1, enthaltend Bleichromat und Bleisulfat im Gew.-Verhältnis 94 : 6 bis 98 : 2.

6. Bleichromatpigmente gemäss Anspruch 1 dadurch erhältlich, dass während bzw. nach der Fällung ein Ueberschuss an Bleiionen von 0,003-0,12 Mol pro Liter über die stöchiometrische Menge vorhanden ist.

7. Bleichromatpigmente gemäss Anspruch 1 dadurch erhältlich, dass man die hohe Turbulenz durch hohe Strömungsgeschwindigkeit oder intensives mechanisches Rühren erzeugt.

8. Bleichromatpigmente gemäss Anspruch 1 dadurch erhältlich, dass man intensives mechanisches Rühren mit einem Hochleistungsrührer erzeugt.

9. Bleichromatpigmente gemäss Anspruch 1, enthaltend zusätzlich texturverbessernde und/oder oberflächenaktive organische Mittel.

10. Bleichromatpigmente dadurch erhältlich, dass auf den Bleichromatpigmenten gemäss Anspruch 1 während der Fällung oder durch eine Nachbehandlung ein Ueberzug eines anorganischen Umhüllungsmittels erzeugt wird.

11. Bleichromatpigmente gemäss Anspruch 10, enthaltend 2-40% eines anorganischen Umhüllungsmittels.

12. Bleichromatpigmente gemäss Anspruch 10, enthaltend 2-20% eines anorganischen Umhüllungsmittels.

13. Bleichromatpigmente gemäss Anspruch 10, enthaltend 3-10% eines anorganischen Umhüllungsmittels.

14. Hochmolekulares organisches Material enthaltend ein Bleichromatpigment gemäss Anspruch 1.

**Patentansprüche für folgenden Vertragsstaat : ES**

1. Verfahren zur Herstellung von orthorhombischen grünstichigen Bleichromatpigmenten enthaltend Bleichromat und Bleisulfat im Gewichtsverhältnis 91 : 9 bis 100 : 0, dadurch gekennzeichnet, dass man zur ihrer Herstellung eine wässrige Lösung eines Bleisalzes mit einer wässrigen Lösung eines Chromates und erforderlichenfalls eines Sulfates unter hoher Turbulenz in Gegenwart eines Aluminiumsalzes und in Abwesenheit von Zinksalzen reagieren lässt, wobei die erhaltenen Bleichromatpigmente eine Farbstärke von 0,066 bis 0,053 bei Standardfarbtiefe 1/25 gemäss DIN 53235 aufweisen.

2. Verfahren gemäss Anspruch 1, dadurch gekennzeichnet, dass das Aluminiumsalz in der Chromatlösung oder erforderlichenfalls in der Chromat-Sulfatlösung vorhanden ist.

3. Verfahren gemäss Anspruch 1, dadurch gekennzeichnet, dass man als Aluminiumsalz ein Aluminat verwendet.

4. Verfahren gemäss Anspruch 3, dadurch gekennzeichnet, dass man als Aluminat Natriumaluminat verwendet.

5. Verfahren gemäss Anspruch 1, worin die Bleichromatpigmente Bleichromat und Bleisulfat im Gew.-Verhältnis 94 : 6 bis 98 : 2 enthalten.

6. Verfahren gemäss Anspruch 1, dadurch gekennzeichnet, dass während bzw. nach der Fällung ein Ueberschuss an Bleiionen von 0,003-0,12 Mol pro Liter über die stöchiometrische Menge vorhanden ist.

7. Verfahren gemäss Anspruch 1, dadurch gekennzeichnet, dass man die hohe Turbulenz durch hohe Strömungsgeschwindigkeit oder intensives mechanisches Rühren erzeugt.

8. Verfahren gemäss Anspruch 1, dadurch gekennzeichnet, dass man intensives mechanisches Rühren mit einem Hochleistungsrührer erzeugt.

9. Verfahren gemäss Anspruch 1, worin die Bleichromatpigmente zusätzlich texturverbessernde und/oder oberflächenaktive organische Mittel enthalten.

10. Verfahren gemäss Anspruch 1, dadurch gekennzeichnet, dass auf den Bleichromatpigmenten während der Fällung oder durch eine Nachbehandlung ein Ueberzug eines anorganischen Umhüllungsmittels erzeugt wird.

11. Verfahren gemäss Anspruch 10, worin die Bleichromatpigmente 2-40% eines anorganischen Umhüllungsmittels enthalten.

12. Verfahren gemäss Anspruch 10, worin die Bleichromatpigmente 2-20% eines anorganischen Umhüllungsmittels enthalten.

13. Verfahren gemäss Anspruch 10, worin die Bleichromatpgimente 3-10% eines anorganischen Umhüllungsmittels enthalten.

## Claims

### Claims for the following Contracting States : BE, CH, DE, FR, GB, IT, LI, NL

1. An orthorhombic greenish-tinged lead chromate pigment containing lead chromate and lead sulfate in a weight ratio of 91 : 9 to 100 : 0, which has a characteristic tinctorial strength of 0.066 to 0.053 with a standard depth of colour of 1/25 in accordance with DIN 53235 and is obtainable by mixing an aqueous solution of a lead salt with an aqueous solution of a chromate and, if necessary, of a sulfate under high turbulence in the presence of an aluminium salt and in the absence of zinc salts.

2. A lead chromate pigment according to claim 1, obtainable when the aluminium salt is present in the chromate solution or, if necessary, in the chromate/sulfate solution.

3. A lead chromate pigment according to claim 1, obtainable by using an aluminate as the aluminium salt.

4. A lead chromate pigment according to claim 3, obtainable by using sodium aluminate as the aluminate.

5. A lead chromate pigment according to claim 1, containing lead chromate and lead sulfate in a weight ratio of 94 : 6 to 98 : 2.

6. A lead chromate pigment according to claim 1, obtainable with an excess of lead ions of 0.003-0.12 mol per litre above the stoichiometric amount being present during or after the precipitation.

7. A lead chromate pigment according to claim 1, obtainable by producing the high turbulence by a high flow rate or intensive mechanical stirring.

8. A lead chromate pigment according to claim 1, obtainable by producing intensive mechanical stirring with a high-performance stirrer.

9. A lead chromate pigment according to claim 1, additionally containing texture-improving and/or surface-active organic agents.

10. A lead chromate pigment, obtainable by producing a coating of an inorganic coating agent on the lead chromate pigment according to claim 1 during the precipitation or by an aftertreatment.

11. A lead chromate pigment according to claim 10, containing 2-40% of an inorganic coating agent.

12. A lead chromate pigment according to claim 10, containing 2-20% of an inorganic coating agent.

13. A lead chromate pigment according to claim 10, containing 3-10% of an inorganic coating agent.

14. A high molecular weight organic material containing a lead chromate pigment according to claim 1.

### Claim for the following Contracting State : ES

1. A process for the preparation of an orthorhombic greenish-tinged lead chromate pigment containing lead chromate and lead sulfate in a weight ratio of 91 : 9 to 100 : 0, which preparation comprises reacting an aqueous solution of a lead salt with an aqueous solution of a chromate and, if necessary, of a sulfate under high turbulence in the presence of an aluminium salt and in the absence of zinc salts, the resulting lead chromate pigment having a tinctorial strength of 0.066 to 0.053 with a standard depth of colour of 1/25 in accordance with DIN 53235.

2. A process according to claim 1, wherein the aluminium salt is present in the chromate solution or, if necessary, in the chromate/sulfate solution.

3. A process according to claim 1, which comprises using an aluminate as the aluminium salt.

4. A process according to claim 3, which comprises using sodium aluminate as the aluminate.

5. A process according to claim 1, wherein the lead chromate pigment contains lead chromate and lead sulfate in a weight ratio of 94 : 6 to 98 : 2.

6. A process according to claim 1, wherein an excess of lead ions of 0.003-0.12 mol per litre above the stoichiometric amount is present during or after the precipitation.

7. A process according to claim 1, which comprises producing the high turbulence by a high flow rate or intensive mechanical stirring.

8. A process according to claim 1, which comprises producing intensive mechanical stirring with a high-performance stirrer.

9. A process according to claim 1, wherein the lead chromate pigment additionally contains texture-improving and/or surface-active organic agents.

10. A process according to claim 1, which comprises producing a coating of an inorganic coating agent on the lead chromate pigment during the precipitation or by an aftertreatment.

11. A process according to claim 10, wherein the lead chromate pigment contains 2-40% of an inorganic coating agent.

12. A process according to claim 10, wherein the lead chromate pigment contains 2-20% of an inorganic coating agent.

13. A process according to claim 10, wherein the lead chromate pigment contains 3-10% of an inorganic coating agent.


**Revendications**

**Revendications pour les Etats contractants suivants : BE, CH, DE, FR, GB, IT, LI, NL**

1. Pigments verdâtres orthorhombiques de chromate de plomb contenant du chromate de plomb et du sulfate de plomb dans un rapport pondéral compris entre 91 : 9 et 100 : 0, qui se caractérisent par une intensité de coloration de 0,066 à 0,053 à la profondeur de coloration normalisée 1/25 suivant la norme allemande DIN 53235, et que l'on obtient en mélangeant sous haute turbulence une solution aqueuse d'un sel de plomb avec une solution aqueuse d'un chromate et si nécessaire d'un sulfate, en présence d'un sel d'aluminium et sans sels de zinc.

2. Pigments selon la revendication 1 pour l'obtention desquels le sel d'aluminium se trouve dans la solution du chromate ou si nécessaire dans une solution du chromate et sulfate.

3. Pigments selon la revendication 1 pour lesquels le sel d'aluminium est un aluminate.

4. Pigments selon la revendication 3 pour lesquels l'aluminate est de l'aluminate de sodium.

5. Pigments selon la revendication 1 contenant le chromate de plomb et le sulfate de plomb dans un rapport pondéral compris entre 94 : 6 et 98 : 2.

6. Pigments selon la revendication 1 dans l'obtention desquels, au cours de la précipitation ou après celle-ci, il y a un excès d'ions plomb de 0,003 à 0,12 Mol par litre par rapport à la proportion stoechiométrique.

7. Pigments selon la revendication 1 pour l'obtention desquels on crée la haute turbulence par une grande vitesse de circulation ou par une vive agitation mécanique.

8. Pigments selon la revendication 1 dans l'obtention desquels on crée la vive agitation mécanique avec un agitateur à haute puissance.

9. Pigments selon la revendication 1 qui contiennent en outre des agents organiques tensio-actifs et/ou destinés à améliorer leur texture.

10. Pigments de chromate de plomb que l'on obtient en recouvrant d'une matière d'enrobage minérale des pigments selon la revendication 1, au cours de leur précipitation ou par un traitement ultérieur complémentaire.

11. Pigments selon la revendication 10 qui contiennent de 2 à 40% de la matière d'enrobage minérale.

12. Pigments selon la revendication 10 qui contiennent de 2 à 20% de la matière d'enrobage minérale.

13. Pigments selon la revendication 10 qui contiennent de 3 à 10% de la matière d'enrobage minérale.

14. Matières organiques macromoléculaires qui contiennent un pigment de chromate de plomb selon la revendication 1.

11

**Revendications pour l'Etat contractant suivant : ES**

1. Procédé de préparation de pigments verdâtres orthorhombiques de chromate de plomb contenant du chromate de plomb et du sulfate de plomb dans un rapport pondéral compris entre 91 : 9 et 100 : 0, procédé caractérisé en ce que l'on fait réagir une solution aqueuse d'un sel de plomb avec une solution aqueuse d'un chromate et si nécessaire d'un sulfate, sous haute turbulence, en présence d'un sel d'aluminium et sans sels de zinc, les pigments de chromate de plomb ainsi obtenus ayant une intensité de coloration de 0,066 à 0,053 à la profondeur de coloration normalisée 1/25 suivant la norme allemande DIN 53235

2. Procédé selon la revendication 1, caractérisé en ce que le sel d'aluminium se trouve dans la solution du chromate ou si nécessaire dans la solution du chromate et sulfate.

3. Procédé selon la revendication 1, caractérisé en ce que le sel d'aluminium est un aluminate.

4. Procédé selon la revendication 3, caractérisé en ce que l'aluminate est de l'aluminate de sodium.

5. Procédé selon la revendication 1, caractérisé en ce que les pigments contiennent le chromate de plomb et le sulfate de plomb dans un rapport pondéral compris entre 94 : 6 et 98 : 2.

6. Procédé selon la revendication 1, caractérisé en ce que, au cours de la précipitation du pigment ou après, il y a un excès d'ions plomb de 0,003 à 0,12 Mol par litre par rapport à la proportion stoechiométrique.

7. Procédé selon la revendication 1, caractérisé en ce que l'on crée la haute turbulence par une grande vitesse de circulation ou par une vive agitation mécanique.

8. Procédé selon la revendication 1, caractérisé en ce que l'on crée la vive agitation mécanique avec un agitateur à haute puissance.

9. Procédé selon la revendication 1, caractérisé en ce que les pigments contiennent en outre des agents organiques tensio-actifs et/ou destinés à améliorer leur texture.

10. Procédé selon la revendication 1, caractérisé en ce que, au cours de leur précipitation ou par un traitement ultérieur complémentaire, on recouvre les pigments d'une matière d'enrobage minérale.

11. Procédé selon la revendication 10, caractérisé en ce que les pigments contiennent de 2 à 40% de la matière d'enrobage minérale.

12. Procédé selon la revendication 10, caractérisé en ce que les pigments contiennent de 2 à 20% de la matière d'enrobage minérale.

13. Procédé selon la revendication 10, caractérisé en ce que les pigments contiennent de 3 à 10% de la matière d'enrobage minérale.

Figur 1

Fig. 2

Fig. 3

Fig. 4